(19) Europäisches Patentamt
European Patent Office
Office européen des brevets

(11) Veröffentlichungsnummer: **0 289 769 B1**

## EUROPÄISCHE PATENTSCHRIFT

(45) Veröffentlichungstag der Patentschrift: **27.12.91**

(51) Int. Cl.5: **A22B 3/00**

(21) Anmeldenummer: **88104701.3**

(22) Anmeldetag: **24.03.88**

---

(54) **Verfahren zum Betäuben von lungenatmenden Schlachttieren.**

---

(30) Priorität: **07.05.87 DE 3715211**
**16.03.88 DE 3808782**

(43) Veröffentlichungstag der Anmeldung:
**09.11.88 Patentblatt 88/45**

(45) Bekanntmachung des Hinweises auf die
Patenterteilung:
**27.12.91 Patentblatt 91/52**

(84) Benannte Vertragsstaaten:
**AT BE CH DE ES FR GB GR IT LI LU NL SE**

(56) Entgegenhaltungen:
**US-A- 2 588 770**
**US-A- 3 548 447**

(73) Patentinhaber: **Tönnies, Bernd**
**Hoppenstrasse 7**
**W-4840 Rheda-Wiedenbrück(DE)**

(72) Erfinder: **Tönnies, Bernd**
**Hoppenstrasse 7**
**W-4840 Rheda-Wiedenbrück(DE)**

(74) Vertreter: **Patentanwälte Dipl.-Ing. Bodo Thielking Dipl.-Ing. Otto Elbertzhagen
Gadderbaumer Strasse 20
W-4800 Bielefeld 1(DE)**

---

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung bezieht sich auf ein Verfahren zum Betäuben von lungenatmenden Schlachttieren vor dem Entblutungsvorgang, insbesondere zum Betäuben von Schweinen, Rindern, Geflügel oder dergleichen, wobei die an einen bestimmten Umgebungsluftdruck, wie den atmosphärischen Druck, gewöhnten Tiere vorübergehend einem Luftunterdruck ausgesetzt werden, indem in einer anfänglichen Dekompressionsphase der Luftunterdruck in einer ersten Stufe zunächst auf einen Zwischenwert abgesenkt wird, wobei die Zeitspanne dieser ersten Stufe der Dekompressionsphase so lang bemessen wird, bis die Schlachttiere keine Bewußtseinsreaktionen sondern nur noch Reflexe zeigen, dann der Luftdruck in zumindest einer weiteren Stufe auf einen Endwert abgesenkt und in einer anschliessenden Isokompressionsphase auf diesem Endwert gehalten wird.

Ein solches Verfahren ist aus der US-PS 2,588,770 bekannt, danach werden die Schlachttiere in einer Unterdruckkammer einem derart vorbestimmten Luftunterdruck ausgesetzt, daß sie entweder betäubt oder getötet werden. Im ersteren Falle wird der Luftdruck in einem einstufigen Vorgang auf einen bestimmten Unterdruckwert gebracht, dem das Tier so lange ausgesetzt bleibt, bis ein Schlafzustand oder eine Bewußtlosigkeit erreicht ist. Im zweiten Falle, wenn also die Tötung des Tieres beabsichtigt ist, stellt der vorgenannte Vorgang die erste Stufe der anfänglichen Dekompressionsphase dar, danach schließt sich dann die weitere Stufe der Dekompressionsphase an, um den Luftdruck auf einen Endwert abzusenken und in einer nachfolgenden Isokompressionsphase auf diesem Endwert zu halten, bei dem durch andauernden Sauerstoffentzug die Tötung des Schlachttieres bewirkt wird.

Der Erfindung liegt die Erkenntnis zugrunde, daß vor dem Entblutungsvorgang eine Tötung des betreffenden Schlachttieres nicht erfolgen darf, damit der Kreislauf des Tieres beim anschließenden Entblutungsvorgang noch aktiv beteiligt werden kann.

Ein anderes Problem ist es, bei den Schlachttieren vor oder während des Betäubungsvorganges eine Schmerz- oder Streßphase möglichst zu vermeiden. Denn eine solche Phase, die auf den natürlichen Abwehrmechanismus im Tierkörper zurückzuführen ist, bewirkt ein Erregungsstadium, das in ein Krampfstadium übergehen kann. Durch Krämpfe im Tierkörper kommt es zu Stoffwechselreaktionen, die für die Fleischqualität nachteilig sind, und es treten Störungen beim nachfolgenden Entblutungsvorgang auf. Das bekannte Verfahren ist zwar auf die Vermeidung physischer Einwirkungen bei den Schlachttieren durch Sauerstoffentzug abgestellt, es berücksichtigt jedoch nicht die physischen und psychischen Auswirkungen, die mit einer unkontrollierten Dekompression verbunden sind. Es kann ebenso nachteilig sein, wie die anderen bekannten Betäubungsverfahren für Schlachttiere, die ebenfalls für sich in Anspruch nehmen, ohne wesentliche physische Einwirkungen auf die Tierkörper zu arbeiten. Es handelt sich hierbei um die Betäubung der Schlachttiere mittels eines elektrischen Stromstoßes oder unter Anwendung von Kohlendioxydgas, auch hierbei tritt jeweils eine nachteilige Schmerz-, Streß- und Krampfphase auf.

Ferner haben Versuche gezeigt, daß ein einstufiges Aufbringen des Luftunterdrucks für den beabsichtigten Betäubungsvorgang bei den Schlachttieren nachteilig ist. An sich kann man den Betäubungsvorgang durch Aufbringung eines hohen Luftunterdrucks verkürzen, weil damit der Sauerstoffentzug wirksamer ist und der reflexlose Zustand des Tierkörpers schneller erreicht wird. Hierbei wird der Körper des Schlachttieres jedoch einer sehr schnellen Entspannung unterworfen, und der sich infolgedessen sehr rasch vollziehende Druckausgleich im Tierkörper von innen nach außen hin kann zu Gefäß- und Gewebezerreißungen insbesondere in der Lunge führen. Folglich kann man mit einer einstufigen Luftdruckabsenkung kein besonders hohes Vakuum fahren, womit sich der gesamte Betäubungsvorgang verzögert.

Der Erfindung liegt nun die Aufgabe zugrunde, das Verfahren der eingangs genannten Art zu verbessern, indem mit der Unterdruckbetäubung möglichst schnell ein krampffreier, reflexloser Zustand des noch lebenden Tierkörpers erreicht wird, bei dem der Kreislauf des Tieres noch insoweit intakt ist, als er beim anschließenden Entblutungsvorgang aktiv beteiligt werden kann.

Diese Aufgabe wird nach der Erfindung bei einem Verfahren der gattungsbildenden Art dadurch gelöst, daß die Dauer der Isokompressionsphase so lang bemessen wird, bis eine Reflexlosigkeit der Schlachttiere erreicht ist, und anschließend an die Isokompressionsphase in einer Rekompressionsphase der Luftdruck in einer Stufe schlagartig auf den Ausgangsluftdruck gebracht wird.

Der besondere Vorteil des erfindungsgemäßen Verfahrens liegt darin, daß die Schlachttiere einer zweistufigen Dekompressionsphase ausgesetzt werden, wobei die erste Stufe der Dekompressionsphase eine Verzögerung des Atemreflexes bewirkt, weil nicht sofort der Unterdruckendwert erreicht wird, womit Streßeinflüsse für die Schlachttiere weitestgehend vermieden werden können. Zudem ermöglicht die erste Stufe des geringeren Luftunterdrucks eine Anpassung des Tierkörpers, um insbesondere Lungenzerreißungen nicht auftreten zu lassen. Während der ersten Stufe der Dekompressionsphase tritt eine solche Sauerstoffverarmung in den Ganglienzellen des Tierkörpers ein, daß schon nach wenigen Sekunden Bewußtseinsreaktionen nicht mehr auftreten. Wenn danach in der zweiten Stufe der Dekompressionsphase über eine Zeitspanne von ebenfalls wenigen Sekunden der Luftunterdruck auf seinen Endwert abgesenkt und anschließend für eine bestimmte Dauer während der Isokompressionsphase gehalten wird, wird der Sauerstofftransport in der Blutbahn des Tieres blockiert, und es findet eine solche Sauerstoffverknappung in den Gehirn- und Rückenmarkszellen des Tieres statt, daß schon nach einer verhältnismäßig kurzen Reflexphase die Reflexlosigkeit erreicht wird, bei der die Nervenbahnen und insbesondere damit die Schmerzleitungsbahnen unterbrochen sind. Der Tierkörper fällt dann in einen schlaffen, krampfreien Zustand. Das alles findet bei noch regelmäßigem Herzschlag des Schlachttieres statt, so daß der Kreislauf des Tieres für den nachfolgenden Entblutungsvorgang noch aktionsfähig ist. Durch die zweite Stufe der Dekompressionsphase kann der eigentliche Betäubungsvorgang schneller von statten gehen, weil man nun einen niedrigen Enddruck erreichen kann, ohne daß sich schädliche Auswirkungen auf den Tierkörper infolge Unterdruckausgleichs ergeben.

Praktische Versuche an Schweinen haben ergeben, daß man mit einer Dauer der ersten Stufe der Dekompressionsphase, in der der Luftunterdruck auf den Zwischenwert abgesenkt wird, von etwa 3 Sekunden auskommt. Diese relativ geringe Zeitspanne reicht zur Verzögerung des Atemreflexes und zur Anpassung des Tierkörpers an den Unterdruck aus. Ausgehend von einem üblichen atmosphärischen Umgebungsluftdruck von 1030 mbar findet während dieser Stufe der Dekompressionsphase eine Absenkung des Luftdrucks auf etwa 150 mbar statt. In der nachfolgenden Stufe der Dekompressionsphase wird dann über eine Zeitdauer von vier Sekunden hinweg ein Luftunterdruck von 30 mbar erreicht, der anschließend über eine Zeitdauer von etwa 30 Sekunden während der Isokompressionsphase gehalten wird, was - wie gesagt - an Schweinen erfolgreich erprobt worden ist. Bei anderen warmblütigen, lungenatmenden Tieren wird man auf empirischem Wege andere Zeitspannen und Luftunterdruckwerte einhalten müssen. Entscheidend dabei ist jedoch immer, daß zwar immer noch eine relativ plötzliche Luftdruckabsenkung erfolgt, dafür jedoch definierte Zeitspannen eingehalten werden, um einerseits physische Schäden, wie Zerreißungen von Lungengeweben und Kapillargefäßen, und andererseits Streß- sowie Schmerzphasen und dadurch bedingte Krampfzustände weitestgehend auszuschalten. Wenn diese Voraussetzungen erfüllt sind, kann im Anschluß an die Isokompressionsphase, während der der Luftunterdruck auf seinem Endwert über eine bestimmte Zeitdauer gehalten worden ist, in der letzten Rekompressionsphase der Luftdruck schlagartig auf den Ausgangsluftdruck gebracht werden, wonach die Schlachttiere so lange in dem schlaffen reflexlosen Zustand verbleiben, wie es für die Einleitung des sich anschließenden Entblutungsvorganges erforderlich ist. Solange bleibt die Herztätigkeit des Tieres und damit der Blutkreislauf unter unveränderten Bedingungen intakt, weswegen beim Entbluten der Blutkreislauf aktiv beteiligt ist, was den Entblutungsvorgang fördert.

Während der zweistufigen Dekompressionsphase und der Rekompressionsphase wird der Körper der Schlachttiere erheblichen Spannungsausgleichen unterworfen, die Druckwellen bewirken, welche die Nerven- und Gehirnzellen beaufschlagen, womit ein flankierender Betäubungseffekt verbunden sein kann. Das setzt voraus, daß die Druckabsenkung während der Dekompressionsphase nicht allmählich sondern in beiden Stufen jeweils nur während weniger Sekunden erfolgt und gleichermaßen während der Rekompressionsphase weitgehend schlagartig die Druckanhebung bewirkt wird.

## Patentansprüche

1. Verfahren zum Betäuben von lungenatmenden Schlachttieren vor dem Entblutungsvorgang, insbesondere zum Betäuben von Schweinen, Rindern, Geflügel und dergleichen, wobei die an einen bestimmten Umgebungsluftdruck, wie den atmosphärischen Druck, gewöhnten Tiere vorübergehend einem Luftunterdruck ausgesetzt werden, indem in einer anfänglichen Dekompressionsphase der Luftunterdruck in einer ersten Stufe zunächst auf einen Zwischenwert abgesenkt wird, wobei die Zeitspanne dieser ersten Stufe der Dekompressionsphase so lang bemessen wird, bis die Schlachttiere keine Bewußtseinsreaktionen sondern nur noch Reflexe zeigen, dann der Luftdruck in zumindest einer weiteren Stufe auf einen Endwert abgesenkt und in einer anschließenden Isokompressionsphase auf diesem Endwert gehalten wird,
dadurch gekennzeichnet,
daß die Dauer der Isokompressionsphase so lang bemessen wird, bis eine Reflexlosigkeit der Schlachttiere erreicht ist und anschließend an die Isokompressionsphase in einer Rekompressionsphase der Luftdruck in einer Stufe schlagartig auf den Ausgangsluftdruck gebracht wird.

2. Verfahren nach Anspruch 1,
dadurch gekennzeichnet,
daß bei Schweinen die Zeitspanne der ersten Stufe der Dekompressionsphase etwa drei Sekunden und die Dauer der Druckabsenkung bis zur Erreichung des Unterdruckendwertes in der zweiten Stufe der Dekompressionsphase etwa vier Sekunden beträgt, womit die Dauer der Dekompressionsphase etwa sieben Sekunden beträgt.

3. Verfahren nach Anspruch 2,
dadurch gekennzeichnet,
daß der Endwert des Luftunterdrucks in der Isokompressionsphase über eine Dauer von etwa 30 Sekunden gehalten wird.

4. Verfahren nach Anspruch 1,
dadurch gekennzeichnet,
daß ausgehend von einem atmosphärischen Druck von etwa 1030 mbar in der ersten Stufe der Dekompressionsphase der Luftdruck auf etwa 150 mbar und in der zweiten Stufe auf etwa 30 mbar abgesenkt wird.

## Claims

1. Method of anaesthetizing, prior to the de-bleeding process, of lung-ventilating animals to be slaughtered, particularly for anaesthetizing of pigs, cattle, and fowl, and the like, whereby animals accustomed to a given surrounding air pressure, such as the atmospheric pressure, are temporarily subjected to a reduced pressure of air, in that in an initial de-compression phase the reduced pressure of air in a first stage is initially brought to an intermediate value, whereby the period of time of this first stage of the de-compression phase is to be selected in such a way that the animals to be slaughtered have no reactions of consciousness, but only show reflexes, then the pressure of air in at least a further stage is brought to a final value and in a subsequent iso-compression phase the pressure of air is maintained at this value, characterized thereby that the duration of the iso-compression phase is of such a length until the animals to be slaughtered have reached the state of being without re-flexes, and subsequently in a re-compression phase the pressure of air in one stage is instantaneously brought back to the starting pressure of air.

2. Method according to claim 1, characterized thereby that in the case of pigs the period of time of the first stage of the de-compression phase is approximately three seconds and the duration of the lowering of the pressure until the final value of reduced pressure of air is reached in the second stage of the de-compression phase is approximately 4 seconds, whereby the duration of the de-compression phase is approximately seven seconds.

3. Method according to claim 2, characterized thereby that the final value of reduced pressure of air in the iso-compression phase is maintained for a period of approximately 30 seconds.

4. Method according to claim 1, characterized thereby that at the outset from an atmospheric pressure of approximately 1030 mbar in the first stage of the de-compression phase the pressure of air is lowered to approximately 150 mbar and in the second stage to approximately 30 mbar.

## Revendications

1. Procédé pour faire perdre conscience aux animaux de boucherie à poumons avant la saignée, tour particulièrement porcs, boeufs, volaille et autres animaux d'abattage analogues, habitués à une certaine pression de l'air ambiant, telle que la pression atmosphérique, en les soumettant, pour commencer, à une subpression passagère, obtenue en réduisant, tout d'abord, au cours d'une phase de décompression, la pression de l'air à une valeur intermédiaire, la durée de cette première période de la phase de décompression étant calculée de sorte que les animaux de boucherie ne présentent plus de réactions conscientes, mais seulement des reflexes, puis, au cours d'au moins une autre période de la phase de décompression, à une valeur finale, laquelle est maintenue pendant une phase d'isocompression faisant suite à la phase de décompression, caractérisé par le fait que la durée de la phase d'isocompression est calculée de sorte que tout reflexe de la part des animaux de boucherie se trouve supprimé, la pression de l'air étant ensuite ramenée, d'un seul coup, en une seule période, à la pression initiale dans le cadre d'une phase de recompression, faisant suite à la phase d'isocompression.

2. Procédé selon revendication 1,
caractérisé par le fait que, pour les porcs, la première période de la phase de décompression dure environ trois secondes et la seconde période de la chute de pression,jusqu'à obtention de la valeur de subpression finale, environ quatre secondes, ce qui donne une durée de la phase de décompression d'environ sept secondes.

3. Procédé selon revendication 2, caractérisé par le fait que la valeur finale de la subpression de l'air est maintenue, au cours de la phase d'isocompression, pendant une durée d'environ 30 secondes.

4. Procédé selon revendication 1, caractérisé par le fait que, partant d'une pression atmosphérique d'environ 1030 mbar, la pression de l'air tombe, au cours de la première période de la phase de décompression, à environ 150 mbar et, au cours de la seconde période de la phase de décompression, à environ 30 mbar.